# EUROPEAN PATENT APPLICATION

(11) **EP 2 820 992 A1**
(43) Date of publication of application: **07.01.2015**
(21) Application number: 14175427.5
(22) Date of filing: 02.07.2014
(51) Int. Cl.: A47L 9/28, A47L 9/19, A47L 9/00

(54) **Vacuum cleaner with air flow regulator**

(30) Priority: 03.07.2013 DK 201370371
(71) Applicant: V. BRÖNDUM A/S, DK-8600 Silkeborg (DK)
(72) Inventor: MADSEN, Ole, 8654 Bryrup (DK)
(74) Representative: Olesen, Birthe Bjerregaard

(57) **Abstract**

The present invention concerns a vacuum cleaner wherein the discharge rate can be adjusted to a certain airflow which is monitored and maintained by an electronic regulator based on continuous measurement of the actual airflow compared with the set desired value for the airflow. When the maximum discharge rate is no longer sufficient to attain the desired airflow - e.g. due to clogging of tool, suction hose or filters, or overfilling of the receiver - there is emitted indication telling the operator that emptying or cleaning is to be performed.

## Description

### Field of the Invention

The present invention concerns a vacuum cleaner containing at least one electric motor driving at least one air pump, the air pump sucking air through at least one filter communicating with a receiver, the receiver being equipped with a suction branch which is equipped with a suction hose connecting the vacuum cleaner to the operating/suction area, the vacuum cleaner being equipped with a control that automatically and continuously monitors and maintains the magnitude of the airflow at an adjustable desired size, and which is based on at least one signal emitter emitting at least one regulation signal based on the actual size of the airflow and including at least one operating panel on which the magnitude of the airflow can be set.

The present invention furthermore concerns a method for regulating the magnitude of the airflow in a vacuum cleaner.

### Background of the Invention

Most vacuum cleaners typically operate with an airflow which is up to twice as large as required when the filters are clean, after which the airflow decreases to the required level as the filters are clogged, after which the vacuum cleaner is normally emptied and cleaned. Vacuum cleaners are almost always running with an unnecessary high airflow corresponding to an estimated excessive consumption of up to 30% of the consumed power.

The required level of airflow depends on the density of the suction material and its surface relative to weight. A greater airflow in the suction hose is thus needed for dislodging and transporting suction materials like e.g. sand and pebbles than needed for dislodging and transporting suction material like e.g. sawdust.

High airspeeds usually mean high noise emission, and minimising the airflow will therefore also mean minimising the noise emission.

When using a vacuum cleaner for suction from grinding machines, the suction can be so strong that the grinding machine is sucked so hard against the base that it affects the grinding result in a negative way and at the same time causes unnecessary wear on the mechanical parts of the grinding machine.

The suction material from e.g. a concrete milling machine can be sharp, and the higher the airflow the stronger grinding action is effected by the suction material on the suction hose which thereby gets a shorter service life.

Vacuum cleaners are often used in connection with shifting workplaces where the available maximum power for the vacuum cleaner will i.a. be determined by the safety fuse of the installation, e.g. 10 - 13 or 16 A. If the available maximum power is exceeded for a shorter or longer time, the fuses of the installation will blow, which is a great nuisance to the work performed in the area.

Both with regard to power consumption, noise emission, tool function as well as wear on equipment it is thus positive and a wish if it is possible to adapt the airflow and the associated power consumption to the task in question and the safety fuse of the installation concerned.

There are vacuum cleaners on the market which are equipped with an electronic capability of adjusting the airflow. This is positive with regard to power consumption, noise emission, tool function as well as wear on equipment but this solution does not take into consideration the airflow reducing action of the filter clogging, and the operator is therefore required to continuously adjust the vacuum cleaner as the filters are clogged.

There is also a mechanical solution on the market by which a variable leakage is produced on the suction hose by adjusting a valve such that the airflow in the connected tool can be adjusted. The power consumption and the noise emission are not minimised by this solution.

Both of these marketed forms of control mean that the operator, in order to keep a constant airflow in the tool, is continually to interrupt his concentration about the tool in order to adjust the vacuum cleaner as the filters are clogged.

US 4399585 concerns a vacuum cleaner with suction regulation where a propeller coupled to an electric generator is disposed on the suction side of the air pump, producing a signal which is used for motor regulation. The motor regulation is effected by a triac triggered by a diac. In that way is achieved cutting a sine curve at a variable time and the power absorbed by the motor is changed. The regulating circuit itself is analogous, and the trigger circuit is based on charging and discharging of capacitors.

### Object of the Invention

The first object of the invention is to achieve an adjustable and constant airflow in a vacuum cleaner which therefore can be adapted to the work operation in a way that will both minimise power consumption and noise emission and increase the service life of vacuum cleaner, suction hose and connected tool.

A second object of the invention is to be able to set the maximum power consumption of the vacuum cleaner so as not to exceed the maximum power available at the actual electric installation and thereby avoid overloading thereof, but at the same time being capable of fully utilising the power limit of the available installation.

### Description of the Invention

The first object of the invention can be achieved in that the vacuum cleaner contains a regulating circuit wherein the air outlet from the air pump is provided with at least one signal emitter capable of emitting at least one regulating signal based on measurement of the actual size of the airflow, the regulating signal transmitted to the regulating circuit that performs a continuous comparison of the magnitude of the actual airflow relative to a set desired value, wherein the desired value can be adjusted on the control panel of the vacuum cleaner, the comparison causing increase, lowering or maintaining of the motor power, the motor power regulation being based on power regulation electronics, the motor power being transmitted via the air pump to airflow, the air flow via the signal emitter in the air outlet and the regulating circuit is thus automatically and continuously monitored and kept constant relative to the set desired value.

By measuring on the discharged air from the vacuum cleaner it is achieved that the measurement results become more reliable. This is due to the fact that the air is cleaned of particles, and that the pressure difference in relation to atmospheric pressure is more constant, and thereby more certain as compared with measuring at the suction side of the vacuum cleaner. If the pressure is measured at the suction side it can vary very much, e.g. due to the dependence on resistance of filters, suction hose and/or other components associated with the airflow in the vacuum cleaner and the degree of filling of the receiver, leading to an inferior regulation of the airflow.

It is preferred that a first sensor is disposed at the discharge side of the air pump for continuously measuring the airflow in the pump system of the vacuum cleaner. The actual pump yield can be automatically compared with the set desired value which e.g. can be set via a +/- button with associated digit display. If the actual pump yield is lesser or greater than the desired value, the associated power control automatically increases and reduces, respectively, the pump power such that the actual pump yield corresponds to the set desired value. If the airflow resistance, e.g. due to clogging of tool, suction hose or overfilling of the dirt container, has become so large that the available maximum pump power cannot reach the set desired value, an indication is transmitted to the operator which is therefore noticed that the vacuum cleaner no longer can attain the desired airflow, and that a cleaning or emptying of the machine is required.

The indicator can be an acoustic or visual signal emitter, e.g. an acoustic beeper or a flashing light.

The signal emitter of the vacuum cleaner preferably includes a vane which via a shaft is connected to a disc with a cutout, in that in connection with the disc there are mounted at least two optocouplers for detecting the position of the cutout of the disc relative to the optocouplers.

Hereby is achieved a very exact regulation of the airflow of the vacuum cleaner and thereby of the suction power as the torque of the vane on the disc is proportional to the airflow in the duct.

It is furthermore preferred that the signal emitter can be set between a minimum value and a maximum value as the disc is connected with adjusting means via a spring.

The airflow and thereby the suction power of the vacuum cleaner can thus be adapted individually to the tasks to which the vacuum cleaner is applied as the suction power can be adapted to the nature of the task, the suction material and/or the base to be cleaned. For example, it varies as to how great a suction power is desired if the vacuum cleaner is used in a conventional way or if the vacuum cleaner is connected to a tool for sucking off e.g. dust, chippings or similar suction material during the work process for the tool.

In a variant, the disc is connected to a shock absorber. The shock absorber acts as a damper on small and rapid deflections in the rotation of the disc. Thereby is achieved that regulation of the airflow occurs more evenly when sudden deflection in the airflow arise, and small deflections can be levelled. Unnecessary deflections in the airflow in the vacuum cleaner are thereby avoided and thereby a more even suction power in the vacuum cleaner as well. In addition, unnecessary deflections and sudden, forceful deflections in the pump speed of the air pump can be avoided which e.g. can cause noise nuisances for the operator or possible wear in the pump.

The objects and the above mentioned effects can also be achieved by a method for regulating the airflow in a vacuum cleaner of the kind mentioned in the introduction. In that the method includes at least the following steps:
- a signal emitter in the vacuum cleaner at the air outlet of the air pump emits at least one regulating signal based on a measurement of the actual size of the airflow;
- a regulating circuit performs a continuous comparison of the actual magnitude of the airflow in relation to a desired value set on the control panel of the vacuum cleaner, the comparison causing increase, lowering or maintaining, respectively, of the motor power. The motor power regulation is based on power regulation electronics where the motor power via the air pump is transmitted to the airflow, and where the airflow via the signal emitter at the air outlet is detected in the regulating circuit such that the airflow is monitored automatically and continuously and kept constant relative to the set desired value.

The method preferably includes that the vane of the signal emitter disposed in the airflow rotates the disc as a function of the airflow speed and in relation to a first and a second optocoupler which, based on position of the cutout in the disc, emit a signal to the regulating circuit in order to regulate the pump action in the air pump. Hereby is achieved the above mentioned, very exact regulation of the airflow of the vacuum cleaner and thereby of the suction power due to the proportionality of the torque of the vane on the disc to the airflow in the duct.

The method preferably includes that the desired value is set in that a spring in the setting means of the signal emitter is preloaded, and that the spring force applies an opposing moment to the disc relative to the moment of the vane on the disc. The airflow and thereby the suction power of the vacuum cleaner can thereby be individually adapted to the tasks for which the vacuum cleaner is used as the suction power can be adapted.

The second object of the invention can furthermore be achieved in that the motor power regulation in the vacuum cleaner is provided with an adjustable power limiter that e.g. can consist of a switch which e.g. is provided on the operating panel. The switch emits a signal to the power regulating circuit as to whether e.g. 10 - 13 or 16 A is the highest allowable amperage used in the electric installation to which the vacuum cleaner is connected and on this basis correspondingly - electronically - limits the maximum consumed power. The switch is e.g. steplessly adjustable between a minimum and a maximum value, e.g. 10 - 16 A, corresponding to the fuse conditions available in the fuse group, or the switch is adjustable in steps according to the current fuse types used in fuse groups in an electric installation, e.g. 10-13-16 A.

This second object is preferably also achieved in that the method further includes that the regulating circuit receives a signal from a switch and sets a maximum allowable power consumption for the vacuum cleaner.

### Description of the Drawing

- Fig. 1: shows a functional diagram for the airflow regulator of the vacuum cleaner;
- Fig. 2: shows an embodiment of an airflow metering station with spring-based setting of a desired value;
- Fig. 3: shows a schematic drawing for the mode of operation of the vane 302; and
- Fig. 4: shows a schematic drawing for the signal emission of the airflow metering station in three typical positions.

### Detailed Description of Embodiments of the Invention

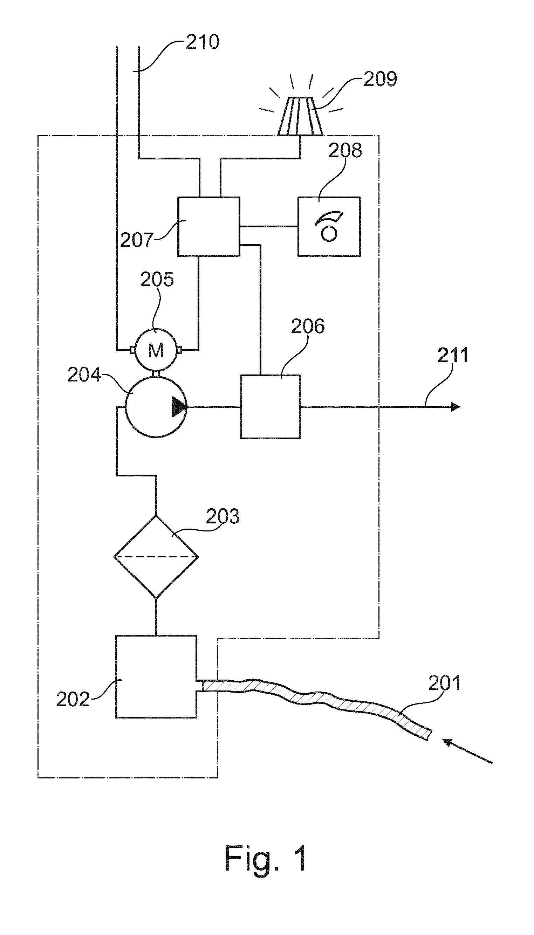

Fig. 1 shows a possible functional diagram for the inventive airflow regulator. The airflow goes through the suction hose 201 into the dirt container 202. From here through the filter 203 to the air pump 204. From the air pump 204 the air passes a metering station 206 where the actual airflow is measured before the airflow is discharged from the vacuum cleaner 211. The pump 204 is driven by the motor 205 which is supplied with energy from network connection 210 via the regulation circuit 207. The regulating circuit 207 compares the desired value 208 with the signal from the metering station 206, and regulates the power for the motor 205 such that the pump 204 delivers an airflow which via the metering station 206 is converted into a signal corresponding to the desired value 208. If the signal from the metering station 206 is lower than the desired value 208, the power from the regulating circuit 207 to the motor 205 is increased until the signal from the metering station 206 is the same as the desired value 208. If the signal from the metering station 206 is lower than the desired value 208, the power from the regulating circuit 207 to the motor 205 is reduced until the signal from the metering station 206 is the same as the desired value 208. When the signal from the metering station 206 is the same as the desired value 208, the power is maintained.

If the resistance through the suction hose 201, the dirt container 202 and the filter 203 together become of such a magnitude that the motor 205 by maximum power cannot bring the pump 204 to deliver the desired airflow, the indicator 209 is switched on.

The metering station 206 can e.g. based on commonly known principles, as e.g. in a measuring orifice that expresses the magnitude of the airflow as a proportional pressure differential, a hotwire anemometer expressing the magnitude of the airflow via the temperature difference arising as a result of the cooling ability of the airflow, a vane wheel anemometer expressing the magnitude of the airflow as an rpm or at least a one-bladed vane expressing the magnitude of the airflow as a torque. An alternative option will be use of an ultrasound flowmeter which based on ultrasound measures the speed of the flowing air. All of these principles could deliver a usable signal that will reflect the actual size of the airflow.

The regulating circuit 207 can e.g. be based on commonly known switch-mode power regulation.

The desired value 208 can e.g. be set via a common rotary potentiometer or an adjustable spring force.

The indicator 209 can e.g. consist of an acoustic beeper or a flashing light.

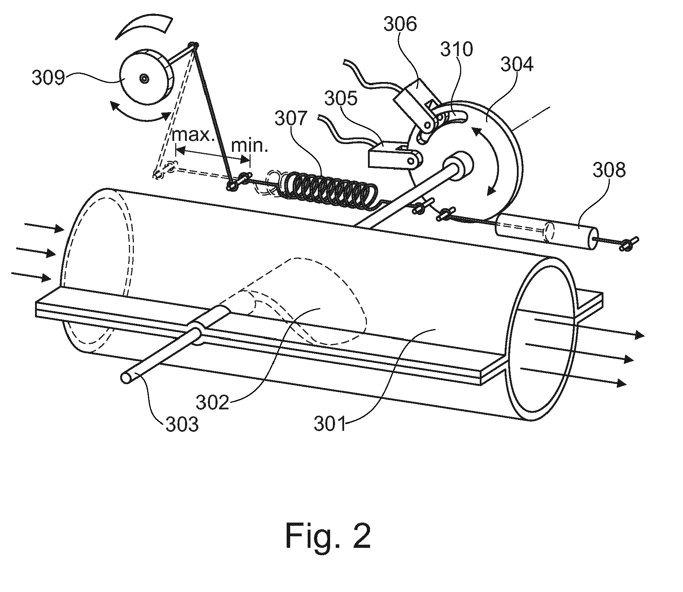

Figs. 2, 3 and 4 show a possible embodiment of an airflow metering station based on a one-bladed vane that expresses the magnitude of the airflow as a torque and where setting the desired value is performed via an adjustable spring pressure.

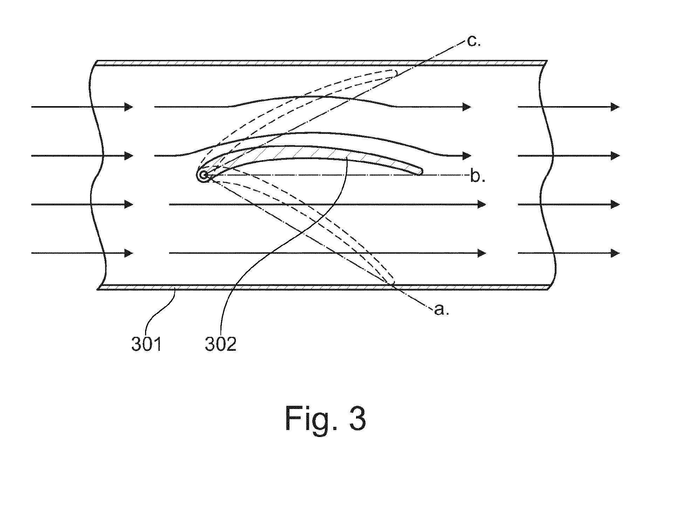

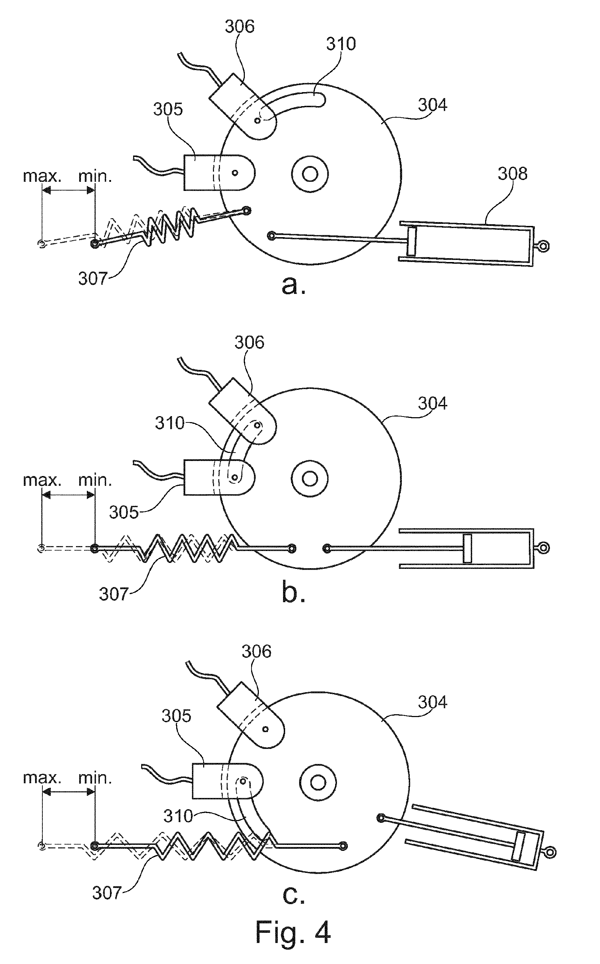

The discharged air from the pump system of the vacuum cleaner is conducted through a duct 301 provided with a vane 302 which is fastened to the transverse shaft 303. The vane 302 can, as shown on Fig. 3, be moved from position a to c, and the movement is transmitted via the transverse shaft 303 to the disc 304. The disc 304 is provided with a spring 307 and preferably with a shock absorber 308 as well. The spring 307 can be preloaded from min. to max. via the handle 309. Two optocouplers 305 and 306 are connected with the power control of the air pump system and a cutout 310 in the disc 304 decides, as shown on Fig. 4, in relation to the position of the disc 304 if the optocouplers 305 and 306 are covered or not. When the air flows through the duct 301 and past the vane 302 as shown on Fig. 3, a pressure difference will arise between bottom side and top side of the vane 302. This pressure difference will result in a lift on vane 302 resulting in a torque which is proportional with the airflow in the duct 301 around the transverse shaft 303, and vane 302 and the disc 304 will thereby try to change position from a to c.

When the disc 304 is turned from a towards c, spring 307 is stretched and an increasing, oppositely directed torque arises. The torque from vane 302 will cause turning of the disc 304 corresponding to the stretching of the spring 307 such that the spring force produced hereby causes a opposing moment which exactly outbalances the moment from vane 302.

When the vacuum cleaner is started, both the vane 302 in the duct 301 and the disc 304 stand at position a. As it appears on Fig. 4, both optocouplers 305 and 306 in position a will be covered which is the signal for the power control to increase the pump power and thereby the airflow.

As long as the airflow is increased, the torque from vane 302 will be increased and the disc 304 will change position from a towards c such that by the consequent extension of spring 307 a corresponding moment is caused all the time, having exactly the same magnitude as the moment from the vane 302. When position b is reached, the disc 304 will as it appears on Fig. 4, pos. b, be disposed such that the cutout 310 opens for optocoupler 305 and optocoupler 306. This position corresponds to the desired value or setpoint for the regulator and is the signal for the power control to stop increasing the pump power.

As long as a balance exists between the torque from vane 302 and the oppositely directed torque from spring 307, the disc 304 will retain its position.

If the airflow is reduced, e.g. due to gradual filter clogging, the lift and thereby the torque from vane 302 will be reduced. The opposing moment from spring 307 will change the position of the disc 304 in direction of position a until the spring force and thereby the opposing moment from spring 307 are reduced so much that balance will exist between the two moments again. If the disc 304 is hereby is turned so far towards a that optocoupler 305 becomes covered, this will be the signal for the power regulation to increase the motor power until the pump power and the airflow again reaches a size where the torque from vane 302 and the opposing moment from spring 307 are in balance, and the disc 304 is positioned in position b where both optocouplers 305 and 306 are open again, thereby being a signal to the power control as to stop the increase in pump power.

If the airflow is increased, e.g. due to dislodging of temporary filter clogging, the lift and thereby the torque from vane 302 will be increased. The opposing moment from spring 307 will be less than the torque from vane 302 and this will change the position of disc 304 in direction of position c. If this means that optocoupler 306 is covered, position c in Fig. 4, this will be the signal for the power regulation to reduce the motor power until the pump power and the airflow again reaches a size where the torque from vane 302 and the opposing moment from spring 307 are in balance, and the disc 304 is positioned at position b where both optocouplers 305 and 306 are open again, this being a signal to the power control as to stop the increase in pump power.

If the airflow is desired to be increased or reduced, the min.-max. preloading of the spring 307 can be changed, according to which the power regulation will automatically provide for the airflow to be of a magnitude which provides a torque from vane 302 exactly corresponding to the opposing moment from spring 307 at position b.

The desired value or setpoint of the airflow is therefore set by changing the preloading of the spring 307.

The motor power regulation is preferably also provided with an adjustable power limiter, preferably by a switch (not shown) provided on the control panel 208 which emits a signal to the regulating circuit 207 about whether e.g. 10 - 13 or 16 is the highest allowable amperage to be used from the electric installation. The regulating circuit 207 then limits the maximum consumed power correspondingly.

The switch is preferably adjusted manually by the operator before connecting the vacuum cleaner to a new electric installation such that it indicates which safety fuse conditions and thereby the maximum power that is available in the electric installation.

The control signal can be set on the switch, either steplessly via e.g. a potentiometer, or the control signal can be produced via a switch with at least 2 or 3 fixed positions, each corresponding to one of the fuse conditions available on the electric installation of e.g. 10-13 or 16 A, and which thereby limits the maximum power available for the vacuum cleaner.

## Claims

1. A vacuum cleaner containing at least one electric motor (205) for driving at least one air pump (204), wherein the air pump (204) can suck air through at least one filter (203) communicating with a receiver (202), the receiver (202) being equipped with a suction branch connecting a suction hose (201) to the operating/suction area of the vacuum cleaner, the vacuum cleaner including a display for displaying a signal, **characterised in that** at the air outlet (211) from the air pump (204), the vacuum cleaner is provided with at least one signal emitter (206) capable of emitting at least one regulating signal based on measurement of the actual size of the airflow, the regulating signal transmitted to the regulating circuit (207) that may perform a continuous comparison of the magnitude of the actual airflow relative to a set desired value, wherein the desired value can be adjusted on the control panel (208) of the vacuum cleaner, the comparison causing increase, lowering or maintaining, respectively, of the motor power, the motor power regulation being based on power regulation electronics, the motor power being transmitted via the air pump (204) to airflow, the air flow being detected in the regulating circuit (207) via the signal emitter (206) in the air outlet such that the airflow is automatically and continuously monitored and kept constant relative to the set desired value.

2. Vacuum cleaner according to claim 1, **characterised in that** the signal emitter (206) includes a vane (302) which via a shaft (303) is connected to a disc (304) with a cutout (310), **in that** in connection with the disc (304) there are mounted at least two optocouplers (305, 306) for detecting the position of the cutout (310) of the disc (304) relative to the optocouplers (305, 306).

3. Vacuum cleaner according to claim 1 or 2, **characterised in that** the signal emitter (206) can be set between a minimum value and a maximum value as the disc (304) is connected with adjusting means (309) via a spring (307).

4. Vacuum cleaner according to claim 3, **characterised in that** the disc (304) is connected to a shock absorber (308).

5. Vacuum cleaner according to any of preceding claims 1-4, **characterised in that** the regulating circuit (207) is furthermore connected with a switch for stepless or stepwise setting of the maximum power of the vacuum cleaner absorbed from an electric installation to which the vacuum cleaner is electrically connected.

6. A method for regulating the airflow in a vacuum cleaner containing at least one electric motor (205), as the electric motor (205) drives at least one air pump (204) communicating with a receiver (202), the method including at least one of the following steps:
- a signal emitter (206) in the vacuum cleaner at the air outlet (211) of the air pump (204) emits at least one regulating signal based on a measurement of the actual size of the airflow;
- a regulating circuit (207) performs a continuous comparison of the actual magnitude of the airflow in relation to a desired value set on the control panel (208) of the vacuum cleaner, the comparison causing increase, lowering or maintaining, respectively, of the motor power;
in that the motor power regulation is based on power regulation electronics where the motor power via the air pump (204) is transmitted to the airflow, and that the airflow via the signal emitter (206) at the air outlet (211) is detected in the regulating circuit (207) such that the airflow is monitored automatically and continuously and kept constant relative to the set desired value.

7. Method according to claim 6, **characterised in that** the vane (302) of the signal emitter(206) disposed in the airflow rotates the disc (306) as a function of the airflow speed and in relation to a first (305) and a second (306) optocoupler which, based on position of the cutout (310) in the disc (304), emit a signal to the regulating circuit (207) in order to regulate the pump action in the air pump (204).

8. Method according to claim 6 or 7, **characterised in that** the desired value is set **in that** a spring (307) in the setting means (309) of the signal emitter (206) is preloaded, and that the spring force applies a opposing moment to the disc relative to the moment of the vane on the disc (304).

9. Method according to any of claims 6-8, **characterised in that** the regulating circuit (207) receives a signal from a switch setting a maximum allowable power consumption.
